# EUROPÄISCHE PATENTSCHRIFT

(11) **EP 1 716 740 B1**
(45) Veröffentlichungstag und Bekanntmachung des Hinweises auf die Patenterteilung: **11.07.2018**
(21) Anmeldenummer: 06002260.5
(22) Anmeldetag: 03.02.2006
(51) Int. Cl.: A01D 57/02

(54) **Schneidwerk**
Cutting device
Appareil de coupe

(30) Priorität: 26.04.2005 DE 102005019668
(43) Veröffentlichungstag der Anmeldung: 02.11.2006
(73) Patentinhaber: CLAAS Selbstfahrende Erntemaschinen GmbH, 33428 Harsewinkel (DE)
(72) Erfinder: Drewes, Rainer, 59320 Ennigerloh (DE)

(56) Entgegenhaltungen:
- US-A- 4 016 710
- US-A- 5 007 235
- US-A- 5 681 117

## Beschreibung

Die Erfindung betrifft ein Schneidwerk eines Mähdreschers nach dem Oberbegriff des Anspruchs 1.

Aus der US 5,007,235 A ist ein Schneidwerk eines Mähdreschers mit einer Haspel bekannt, wobei die Haspel im Wesentlichen aus mehreren mit Abstand zueinander angeordneten Trag-und Steuersternen und wenigstens einem Tragbalken besteht, wobei der Tragbalken im Bereich der Tragsterne in Lagerungen fixiert ist, wobei jede Lagerung von zumindest einem Lager gebildet wird, wobei das Lager wenigstens eine erste axiale Fixierung umfasst. Aus der US 5,681,117 A ist ein Schneidwerk gemäß dem Oberbegriff des Anspruches 1 bekannt.

Aus dem GM 77 02 807 ist eine Haspel für einen Mähdrescher offenbart, bei der die sternförmig angeordneten Haspelspeichen jeweils aus einem Grundkörper und einem Gegenstück bestehen, wobei Grundkörper und Gegenstück jeweils mit einer offenen Bohrung versehen sind. Zwischen dem Grundkörper und dem Gegenstück ist in eine zweiteilige, aus Kunststoff gefertigte Lagerschale fest eingeklemmt, die den Tragbalken dreh- und schwenkbeweglich aufnimmt.

Um die axiale Bewegung des Tragbalkens in den Lagerschalen zu begrenzen, werden die Tragbalken unmittelbar neben den Lagerschalen von Stiften durchsetzt, deren aus dem Tragrohr vorstehende Enden an die Lager anstoßen, sobald das Tragrohr sich axial in der Lagerschale bewegt.

Nachteilig bei dieser Lagerung der Haspelrechen ist, dass das Erntegut am äußeren Umfang der Haspel an den vorstehenden Enden der Stifte eingeklemmt und anschließend um die Haspel gewickelt wird.

Der Erfindung liegt daher die Aufgabe zugrunde die Nachteile des Standes der Technik zu vermeiden und insbesondere eine Haspel zu entwickeln, bei der die Gefahr des Umwickelns mit Erntegut reduziert wird.

Diese Aufgabe wird erfindungsgemäß durch die kennzeichnenden Merkmale des Anspruchs 1 gelöst. Weitere vorteilhafte Wirkungen des Erfindungsgegenstandes ergeben sich aus den Unteransprüchen.

Dadurch, dass jede Lagerung von zumindest einem Lager gebildet wird, wobei das Lager wenigstens eine integrierte axiale Fixierung umfasst, sind die axialen Anschläge außerhalb des Gutflusses, so dass die Wickelneigung erheblich reduziert oder ganz vermieden wird.

In vorteilhafter Ausgestaltung der Erfindung sichert eine erste integrierte axiale Fixierung den Tragbalken innerhalb des Lagers, wodurch eine kompakte Bauweise erreicht wird.

Dabei verbindet eine erste integrierte axiale Fixierung den Tragbalken mit einer Buchse, die auf dem Tragbalken angeordnet ist, so dass an der Buchse sowie an dem Tragbalken im Bereich der Lager keine vorstehenden Kanten vorhanden sind.

Indem die zweite integrierte axiale Fixierung die Buchse in einem Lagergehäuse sichert, wobei die Buchse in dem Lagergehäuse drehbar gelagert ist, kann sich der Tragbalken im Lager drehen und wird gleichzeitig im Lager axial unverschieblich gehalten.

Eine besonders vorteilhafte Ausgestaltung ergibt sich, wenn die erste integrierte axiale Fixierung aus wenigstens einem Nocken besteht, der in einer Ausnehmung der Buchse angeordnet ist, wobei die Ausnehmung in der Buchse dem Querschnitt des Tragbalkens entspricht und der Tragbalken wenigstens eine Bohrung aufweist, in die der Nocken eingreift. Dies hat vor allem den Vorteil, dass die Buchse das Element zur axialen Fixierung der Buchse auf dem Tragbalken beinhaltet.

In vorteilhafter Ausgestaltung der Erfindung ist der Nocken versenkbar, damit das Tragrohr in die Ausnehmung der Buchse eingeschoben werden kann.

Dadurch, dass die Buchse aus zumindest zwei Teilelementen besteht, die aufklappbar und/oder teilbar miteinander verbunden sind, kann die Buchse radial um das

Tragrohr montiert werden. Das hat insbesondere den Vorteil, dass die Buchsen einfach auf dem Tragrohr montierbar und demontierbar sind.

In vorteilhafter Ausgestaltung sind die Teilelemente der Buchse einends über ein Gelenk und andernends über einen Verschluss miteinander verbunden. Dies hat den Vorteil, dass die Teilelemente im aufgeklappten Zustand über das Gelenk verbunden sind, wodurch die Montage- und Demontagearbeit vereinfacht wird.

In einer alternativen Ausführung der Erfindung weist die erste integrierte axiale Fixierung einen Stift auf, der zumindest teilweise die Buchse und zumindest teilweise den Tragbalken durchdringt, so dass auf einfache Weise eine formschlüssige Verbindung hergestellt ist.

Damit die Buchse bündig mit dem Lagergehäuse abschließen kann, ist die zweite integrierte axiale Fixierung aus einer an der Buchse angeordneten, umlaufenden Ringnut und einer an dem Lagergehäuse angeordneten Fixiersteg gebildet, wobei der Fixiersteg in die Ringnut der Buchse eingreift. Bei dieser Anordnung wird verhindert, dass Erntegut in den Raum zwischen Buchse und Lagergehäuse eindringt.

In vorteilhafter Weiterbildung der Erfindung umfasst das Lagergehäuse eine Lagerschale und einen Bügel, wobei die Lagerschale und der Bügel miteinander verbunden werden, so dass das Lagergehäuse radial um die Buchse montiert werden kann.

Eine besonders vorteilhafte Ausgestaltung ergibt sich, wenn die Lagerschale federnde Halteelemente und der Trag- oder Steuerstern entsprechende Öffnungen aufweist, in die die federnden Halteelemente der Lagerschale einrasten, so dass die Halteelemente an den Trag- und Steuersternen fixierbar sind und der Tragbalken mit den Buchsen in die Lagerschalen einlegbar ist. Auf diese Weise ist eine einfache Montage des Tragbalkens an den Trag- und Steuersternen möglich.

Dadurch, das der Trag- oder Steuerstern Abkantungen aufweist und der Bügel zwischen die Lagerschale und den Abkantungen des Trag- oder Steuersterns eingeschoben wird, ist das Lagergehäuse in Umfangsrichtung der Haspel formschlüssig mit dem Trag- oder Steuerstern verbunden.

Um das Lagergehäuse an dem Trag- oder Steuerstern zu befestigen und gleichzeitig den Bügel an der Lagerschale zu sichern sind der Trag- oder Steuerstern, der Bügel und die Lagerschale über wenigstens eine Schraubenverbindung miteinander verbunden.

Damit sich der Bügel beim Zusammenfügen des Lagergehäuses auf die Lagerschale aufschieben lässt ohne dabei zu verdrehen, sind an dem Bügel beidseitig Vorsprünge und an der Lagerschale beidseitig Nuten angeordnet, die zusammen Führungen zwischen dem Bügel und der Lagerschale ergeben.

Vorteilhafterweise werden die Buchse und/oder das Lagergehäuse als Spritzgussteil gefertigt, so dass das Lager kostengünstig herstellbar ist.

Dadurch, dass das Lager vorteilhafterweise aus Kunststoff gefertigt wird, weist es bei hoher Stabilität ein geringes Eigengewicht auf und besitzt gleichzeitig gute Gleiteigenschaften.

Weitere vorteilhafte Ausgestaltungen sind Gegenstand weiterer Unteransprüche und werden nachfolgend an Hand eines in mehreren Figuren dargestellten Ausführungsbeispiels näher erläutert.

Es zeigen:
- Fig.1: eine schematische Seitenansicht eines Mähdreschers,
- Fig.2: einen Ausschnitt einer perspektivischen Ansicht einer Haspel,
- Fig.3: eine Seitenansicht des Lagers,
- Fig.4: eine perspektivische Ansicht des Lagers,
- Fig. 5: eine perspektivische Ansicht einer zweiten Ausführung der erfindungsgemäßen Fixierung.

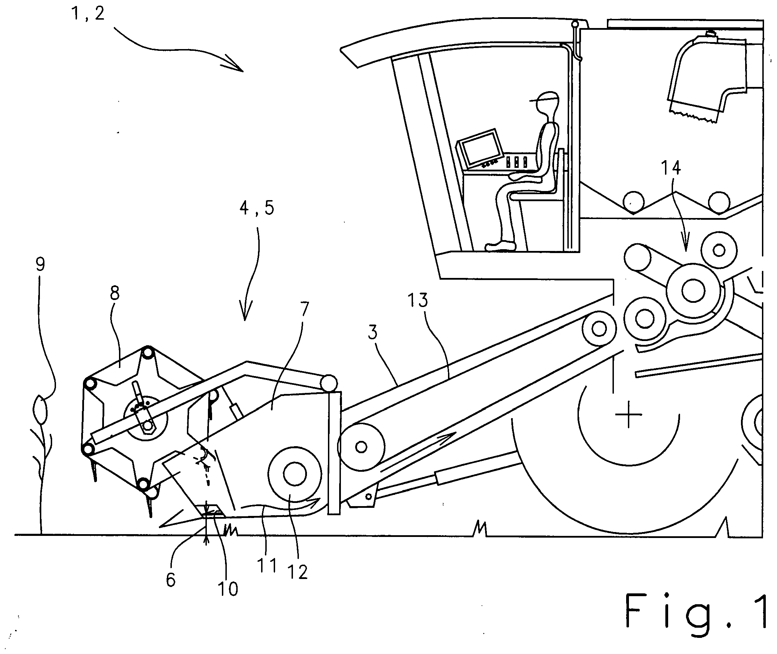

In der Fig.1 ist eine als selbstfahrender Mähdrescher 1 ausgeführte landwirtschaftliche Arbeitsmaschine 2 in der Seitenansicht während der Erntefahrt dargestellt. Frontseitig weist der Mähdrescher 1 einen vertikal schwenkbaren Einzugsschacht 3 auf, an dem ein als Schneidwerk 4 ausgeführter Aufnahmevorsatz 5 angeordnet ist. Mit dem schwenkbaren Einzugsschacht 3 ist das Schneidwerk 4 auf eine gewünschte Schneidwerkshöhe 6 einstellbar. Das Schneidwerk 4 besteht aus einem Schneidtisch 7 und aus einer an dem Schneidtisch 7 befestigten rotierend angetriebenen Haspel 8, wobei die Haspel 8 gegenüber dem Schneidtisch 7 höhenverstellbar und in horizontaler Richtung verstellbar ist. Das zu erntende Erntegut 9 wird mit einem an der vorderen Kante des Schneidtischs 7 angeordneten Messerbalken 10 abgeschnitten und das geschnittene Erntegut 11 anschließend mit Hilfe der Haspel 8 zu einer im Schneidtisch 7 angeordneten, rotierend angetriebenen Einzugsschnecke 12 gefördert. Die Einzugsschnecke 12 führt das Erntegut 11 dem Einzugsschacht 3 zu. In dem Einzugsschacht 3 läuft ein Schrägförderer 13, der das Erntegut 11 an das Dreschwerk 14 übergibt.

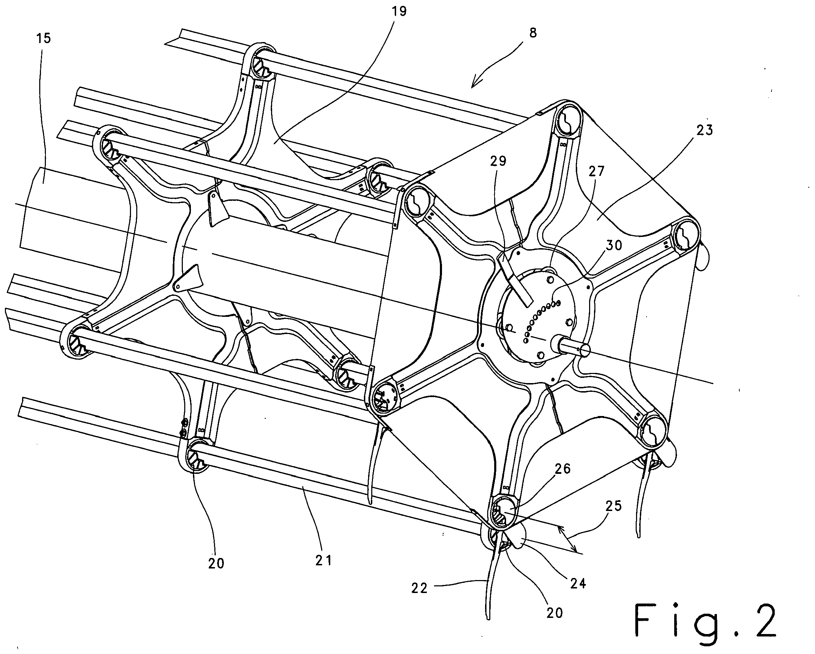

Fig.2 zeigt einen Ausschnitt einer perspektivisch dargestellten Haspel 8. Auf einer Haspelwelle 15 sind in gleichmäßigen Abständen mehrere Tragsterne 19 befestigt. Am Umfang der Tragsterne 19 sind in, an späterer Stelle noch näher erläuterten Lagern 20 drehbar bzw. schwenkbar mehrere Tragbalken 21 angeordnet, die sich durchgehend über die gesamte Breite der Haspel 8 erstrecken. An diesen Tragbalken 21 sind mehrere Förderzinken 22 gleichmäßig beabstandet angeordnet, die fest mit dem Tragbalken 21 verbunden sind. Damit die Tragbalken 21 mit den daran starr angebrachten Förderzinken 22 beim Umlauf der Haspel 8 verschwenken, sind die Tragbalken 21 an einen Steuerstern 23 gekoppelt, der über ein Rollenlager 27 drehbar auf der Haspelwelle 15 gelagert ist. Die Tragsterne 19 sind zentrisch auf der Haspelwelle 15 angeordnet, während der Steuerstern 23 exzentrisch auf der Haspelwelle 15 gelagert ist. Die Koppelung des Tragbalkens 21 mit dem Steuerstern 23 erfolgt derart, dass jeder Tragbalken 21 eine Kurbel 24 mit einem Versatz 25 aufweist, deren freies Ende jeweils in einem Lager 26 am Umfang des Steuersterns 23 drehbar gelagert ist. Der Schwenkwinkel jedes Tragbalkens 21 und damit die Ausrichtung der an dem jeweiligen Tragbalken 21 befestigten Förderzinken 22 ist abhängig von dem momentanen Drehwinkel der Haspel 8. Um die Bewegungsbahn der Förderzinken 22 und damit ihre jeweils zu einem bestimmten Drehwinkel der Haspel 8 zugehörige Ausrichtung zu verändern, kann der Steuerstern 23 mittels eines am Steuerstern 12 angebrachten Handhebels 29 auf der Haspelwelle 15 in eine gewünschte Lage gedreht und mit Hilfe einer Feststellvorrichtung 30 in dieser Lage festgestellt werden. Je nach dem, mit welcher Neigung die Förderzinken 22 in das Erntegut eingreifen bzw. aus dem Erntegut herausgleiten, wird die Effektivität der Förderung des Ernteguts durch die Förderzinken 22 beeinflusst.

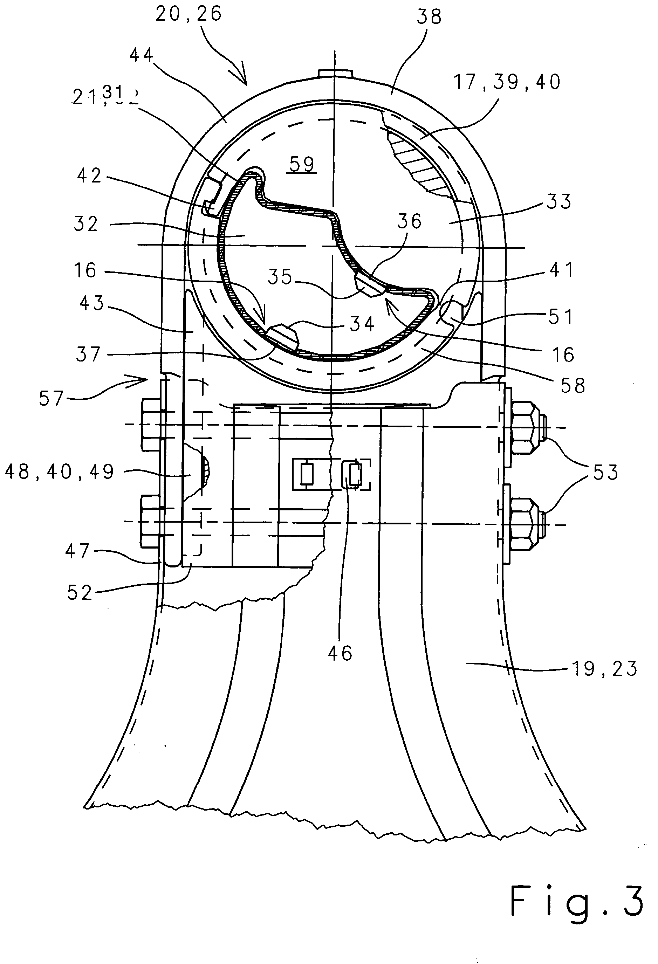

Fig.3 zeigt eine Seitenansicht des Lagers 20 in dem der Tragbalken 21 an dem Tragstern 19 gelagert ist. Der Tragbalken 21 besteht aus einem ungleichförmigen Hohlprofil 31, welches eine entsprechende Ausnehmung 32 einer zylinderförmigen Buchse 33 durchdringt. Das Lager 20 umfasst erfindungsgemäß eine erste integrierte axiale Fixierung 16, die den Tragbalken 21 mit der Buchse 33 verbindet. Die erste integrierte axiale Fixierung 16 besteht aus zwei in der Ausnehmung 32 angeordneten Nocken 34, 35, die in entsprechende Bohrungen 36, 37 im Tragbalken 21 eingreifen, so dass die Buchse 33 innerhalb des Lagers 20 gegen axiales Verschieben und Verdrehen auf dem Tragbalken 21 gesichert wird.

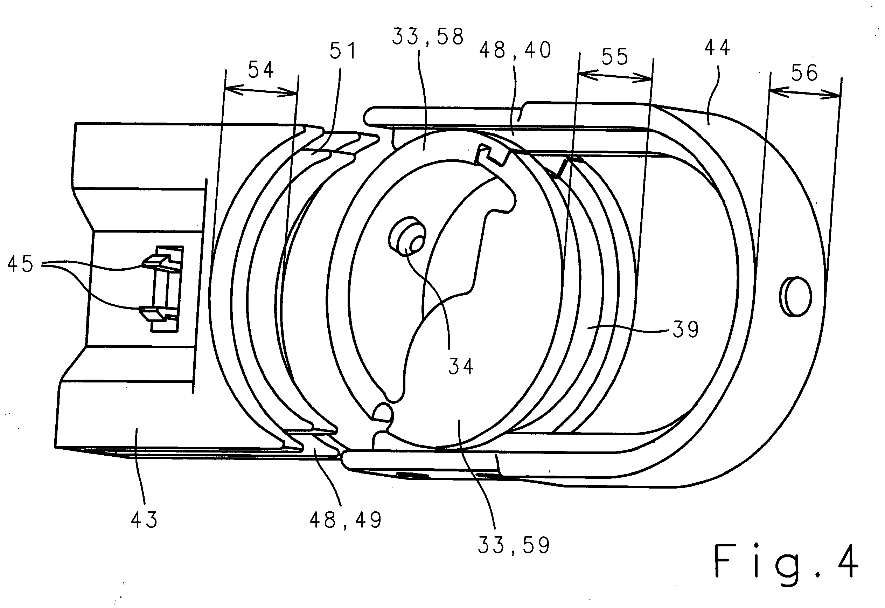

Um die Buchse 33 auf dem Tragbalken 21 zu montieren, besteht diese wie in Fig. 4 dargestellt aus zwei Teilelementen 58, 59, die aufklappbar miteinander verbunden sind. Hierzu sind die Teilelemente 58, 59 einends mit einem Gelenk 41 und andernends mit einem Verschluss 42 versehen.

Es ist jedoch auch eine Ausführung denkbar, bei der die Buchse 33 aus zwei Teilelementen besteht, die über Verschlüsse miteinander verbindbar sind. Die oben genannten Ausführungen der Buchse 33 können radial um die Tragachse 21 angebracht werden und sind deshalb einzeln auswechselbar. Es ist jedoch ebenso eine Ausführung der Buchse 33 vorstellbar, bei der die Nocken 34, 35 versenkbar sind, so dass die Buchsen 33 auf die Tragbalken 21 aufschiebbar sind.

Die Buchse 33 selbst ist in einem Lagergehäuse 38 drehbar gelagert, welches am Tragstern 19 befestigt ist. Eine zweite integrierte axiale Fixierung 17 sichert die Buchse 33 in dem Lagergehäuse 38 und somit den Tragbalken 21 innerhalb des Lagers 20, wodurch die Stabilität der Haspel 8 erhöht wird.

Die zweite erfindungsgemäße integrierte axiale Fixierung 17 wird aus einer an der Buchse 33 angeordneten, umlaufenden Ringnut 39 und den an dem Lagergehäuse 38 angeordneten Fixierstege 40, 51 gebildet, die in die Ringnut 39 der Buchse eingreifen.

Die zweite integrierte axiale Fixierung 17 hat den Vorteil, das die Buchse 33 bündig mit dem Lagergehäuse 38 abschließt, so dass das Lager 20 keine vor- oder zurückspringende Kanten aufweist, wodurch ein Eindringen von Erntegut zwischen Buchse 33 und Lagerhäuse 38 vermieden wird.

Das Lagergehäuse 38 ist wie in Fig. 4 dargestellt zweiteilig ausgeführt und besteht aus einer Lagerschale 43 und einem Bügel 44. Die Lagerschale 43 weist zwei federnde Halteelemente 45 auf, die in entsprechende Öffnungen 46 am Trag- oder Steuerstern 19, 23 einrasten, um die Lagerschale 43 zunächst am Tragstern 19 zu fixieren. Der Tragbalken 21 mit den daran befestigten Buchsen 33 wird in die an den Tragsternen 19 fixierten Lagerschalen 43 eingelegt. Anschließend wird jeweils ein Bügel 44 über die Buchse 33 zwischen der Lagerschale 43 und den Abkantungen 47 des Tragsterns 19 eingeschoben, um das Lagergehäuse 38 zu verschließen und das Lager 20 in Umfangsrichtung formschlüssig mit dem Tragstern 19 zu verbinden. Damit der Bügel 44 beim Aufschieben geführt wird, sind zwischen der Lagerschale 43 und dem Bügel 44 beidseitig Führungen 48 angeordnet, die jeweils aus Nuten 49 an der Lagerschale 43 und einem entsprechenden Fixiersteg 40 an dem Bügel 44 gebildet werden. Der Fixiersteg 40 stößt am Ende der Nuten 49 gegen einen Anschlag 52, der die Lage des Bügels 44 bei geschlossenem Lager 20 vorgibt. Der Tragstern 19, die Lagerschale 43 und der Bügel 44 werden über zwei Schraubenverbindungen 53 miteinander verbunden, die einerseits den Bügel 44 an der Lagerschale 43 sichern und gleichzeitig das Lagergehäuse 38 mit dem Tragstern 19 verbinden.

Die Breite 54 der Lagerschale 43 der Tragsterne 19, die Breite 55 der Buchse 33 sowie die Breite 56 des Lagergehäuses 38 sind gleich und alle drei Bauteile sind zueinander fluchtend angeordnet, zudem bildet der Bügel 44 des Lagergehäuses 38 zusammen mit den Abkantungen 47 des Tragsterns 19 eine annähernd stufenlose Außenkontur 57, so dass am Umfang des Tragsterns 19 keine vorstehenden Kanten vorhanden sind, an denen Erntegut anhaften kann.

Das Lager 26 am Steuerstern 23 kann baugleich zu dem Lager 20 am Tragstern 19 ausgeführt sein, so dass die Buchse 33 und das Lagergehäuse ebenfalls dazu verwendet werden können, um das freie Ende der Kurbel 24 des Tragbalkens 21 zu lagern.

Die in großer Stückzahl benötigten Lager 20, 26 sind kostengünstig herstellbar, wenn die Buchse 33 und das Lagergehäuse 38 vorzugsweise als Spritzgussteil gefertigt werden.

Damit die Lager 20, 26 ein geringes Eigengewicht und gute Gleiteigenschaften aufweisen, sind die Buchse 33 und das Lagergehäuse 38 vorzugsweise aus Kunststoff gefertigt.

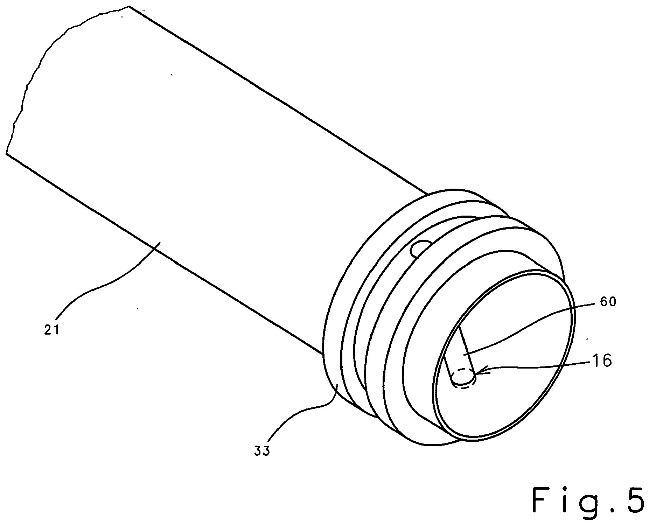

Es ist ebenso eine erfindungsgemäße Ausführung gemäß Fig. 5 vorstellbar, bei der die erste integrierte Fixierung 16 einen Stift 60 umfasst, der eine geschlossene, auf den Tragbalken 21 aufgeschobene Hülse 33 und den Tragbalken 21 durchdringt und formschlüssig miteinander verbindet, wobei der Stift 60 nicht über die Hülse 33 übersteht.

**Bezugszeichenliste:**

| | | | |
|---|---|---|---|
| 1 | Mähdrescher | 31 | Hohlprofil |
| 2 | Landw. Arbeitsmaschine | 32 | Ausnehmung |
| 3 | Einzugsschacht | 33 | Buchse |
| 4 | Schneidwerk | 34 | Nocken |
| 5 | Aufnahmevorsatz | 35 | Nocken |
| 6 | Schneidwerkshöhe | 36 | Bohrung |
| 7 | Schneidtisch | 37 | Bohrung |
| 8 | Haspel | 38 | Lagergehäuse |
| 9 | Erntegut | 39 | Ringnut |
| 10 | Messerbalken | 40 | Fixiersteg |
| 11 | Erntegut | 41 | Gelenk |
| 12 | Einzugsschnecke | 42 | Verschluss |
| 13 | Schrägförderer | 43 | Lagerschale |
| 14 | Dreschwerk | 44 | Bügel |
| 15 | Haspelwelle | 45 | Halteelement |
| 16 | erste integrierte axiale Fixierung | 46 | Öffnungen |
| 17 | zweite integrierte axiale Fixierung | 47 | Abkantungen |
| 18 | | 48 | Führungen |
| 19 | Tragsterne | 49 | Nuten |
| 20 | Lager | 50 | |
| 21 | Tragbalken | 51 | Fixiersteg |
| 22 | Förderzinken | 52 | Anschlag |
| 23 | Steuerstern | 53 | Schraubenverbindung |
| 24 | Kurbel | 54 | Breite |
| 25 | Versatz | 55 | Breite |
| 26 | Lager | 56 | Breite |
| 27 | Rollenlager | 57 | stufenlose Außenkontur |
| 28 | Feststellvorrichtung | 58 | Teilelement |
| 29 | Handhebel | 59 | Teilelement |
| 30 | Feststellvorrichtung | 60 | Stift |

## Patentansprüche

1. Schneidwerk eines Mähdreschers (1) mit einer Haspel (8), wobei die Haspel (8) im Wesentlichen aus mehreren mit Abstand zueinander angeordneten Trag-und Steuersternen (19, 23) und wenigstens einem Tragbalken (21) besteht, wobei der Tragbalken (21) im Bereich der Trag- und Steuersterne (19, 23) in Lagerungen fixiert ist, wobei jede Lagerung von zumindest einem Lager (20, 26) gebildet wird, wobei das Lager (20, 26) wenigstens eine erste integrierte axiale Fixierung (16, 17) umfasst, wobei die erste integrierte axiale Fixierung (16) den Tragbalken (21) mit einer Buchse (33) verbindet, die auf dem Tragbalken (21) angeordnet ist, **dadurch gekennzeichnet,**
**dass** eine zweite integrierte axiale Fixierung (17) die Buchse (33) in einem Lagergehäuse (38) sichert, wobei die Buchse (33) in dem Lagergehäuse (38) drehbar gelagert ist.

2. Schneidwerk nach Anspruch 1,
**dadurch gekennzeichnet,**
**dass** die erste integrierte axiale Fixierung (16) den Tragbalken (21) innerhalb des Lagers (20, 26) axial sichert.

3. Schneidwerk nach Anspruch 1 oder 2,
**dadurch gekennzeichnet,**
**dass** die erste integrierte axiale Fixierung (16) aus wenigstens einem Nocken (34, 35) besteht, der in einer Ausnehmung (32) der Buchse (33) angeordnet ist, wobei die Ausnehmung (32) in der Buchse (33) dem Querschnitt des Tragbalkens (21) entspricht und der Tragbalken (21) wenigstens eine Bohrung (36, 37) aufweist, in die der Nocken (34, 35) eingreift.

4. Schneidwerk nach Anspruch 3,
**dadurch gekennzeichnet,**
**dass** der Nocken (34, 35) versenkbar ist.

5. Schneidwerk nach wenigstens einem der vorhergehenden Ansprüche,
**dadurch gekennzeichnet,**
**dass** die Buchse (33) aus zumindest zwei Teilelementen (58, 59) besteht, die aufklappbar und/oder teilbar miteinander verbunden sind.

6. Schneidwerk nach Anspruch 5,
**dadurch gekennzeichnet,**
**dass** die Teilelemente (58, 59) der Buchse (33) einends über ein Gelenk (41) und andernends über einen Verschluss (42) miteinander verbunden sind.

7. Schneidwerk nach wenigstens einem der vorhergehenden Ansprüche,
**dadurch gekennzeichnet,**
**dass** die erste integrierte axiale Fixierung (16) einen Stift (60) umfasst, der zumindest teilweise die Buchse (33) und zumindest teilweise den Tragbalken (21) durchdringt.

8. Schneidwerk nach wenigstens einem der vorhergehenden Ansprüche,
**dadurch gekennzeichnet,**
**dass** die zweite integrierte axiale Fixierung (17) aus einer an der Buchse (33) angeordneten, umlaufenden Ringnut (39) und einem am Lagergehäuse (38) angeordneten Fixiersteg (40) gebildet wird, wobei der Fixiersteg (40) des Lagergehäuses (38) in die umlaufende Ringnut (39) der Buchse (33) eingreift.

9. Schneidwerk nach wenigstens einem der vorhergehenden Ansprüche,
**dadurch gekennzeichnet,**
**dass** das Lagergehäuse (38) eine Lagerschale (43) und einen Bügel (44) umfasst, wobei die Lagerschale (43) und der Bügel (44) miteinander verbunden werden.

10. Schneidwerk nach Anspruch 9,
**dadurch gekennzeichnet,**
**dass** die Lagerschale (43) federnde Halteelemente (45) und der Trag- oder Steuerstern (19, 23) entsprechende Öffnungen (46) aufweist, in die die federnden Halteelemente (45) der Lagerschale (43) eingerastet sind.

11. Schneidwerk nach Anspruch 9 oder 10,
**dadurch gekennzeichnet,**
**dass** der Trag- oder Steuerstern (19, 23) Abkantungen (47) aufweist und der Bügel (44) zwischen der Lagerschale (43) und den Abkantungen (47) des Trag- oder Steuersterns (19, 23) eingeschoben ist.

12. Schneidwerk nach wenigstens einem der Ansprüche 9 bis 11,
**dadurch gekennzeichnet,**
**dass** der Trag- oder Steuerstern (19, 23), der Bügel (44) und die Lagerschale (43) über wenigstens eine Schraubenverbindungen (53) miteinander verbunden sind.

13. Schneidwerk nach wenigstens einem der Ansprüche 9 bis 12,
**dadurch gekennzeichnet,**
**dass** an dem Bügel (44) beidseitig Vorsprünge (40) und an der Lagerschale (43) beidseitig Nuten (49) angeordnet sind, die zusammen Führungen (48) zwischen dem Bügel (44) und der Lagerschale (43) ergeben.

14. Schneidwerk nach wenigstens einem der vorhergehenden Ansprüche,
**dadurch gekennzeichnet,**
**dass** die Buchse (33) und/oder das Lagergehäuse (38) als Spritzgussteil ausgeführt sind.

15. Schneidwerk nach wenigstens einem der vorhergehenden Ansprüche,
**dadurch gekennzeichnet,**
**dass** die Buchse (33) und/oder das Lagergehäuse (38) aus Kunststoff gefertigt sind.

## Claims

1. Cutterbar of a combine harvester (1) with a reel (8), wherein the reel (8) consists substantially of several mounting and control stars (19, 23) arranged at a distance from one another and at least one rasp bar (21), wherein the rasp bar (21) is fixed in the area of the mounting and control stars (19, 23) in bearing units, wherein each bearing unit is formed from at least one bearing (20, 26), wherein the bearing (20, 26) comprises at least one first integrated axial fixing (16, 17), wherein the first integrated axial fixing (16) connects the rasp bar (21) to a sleeve (33) which is arranged on the rasp bar (21),
**characterized in that**
a second integrated axial fixing (17) secures the sleeve (33) in a bearing housing (38), wherein the sleeve (33) is mounted rotatable in the bearing housing (38).

2. Cutterbar according to claim 1,
**characterized in that**
the first integrated axial fixing (16) secures the rasp bar (21) axially inside the bearing (20, 26).

3. Cutterbar according to claim 1 or 2,
**characterized in that**
the first integrated axial fixing (16) consists of at least one cam (34, 35) which is arranged in a recess (32) of the sleeve (33), wherein the recess (32) in the sleeve (33) corresponds to the cross-section of the rasp bar (21) and the rasp bar (21) has at least one drill-hole (36, 37) in which the cam (34, 35) engages.

4. Cutterbar according to claim 3,
**characterized in that**
the cam (34, 35) is retractable.

5. Cutterbar according to at least one of the previous claims,
**characterized in that**
the sleeve (33) consists of at least two part-elements (58, 59) which are connected to each other in hinged and/or in separable manner.

6. Cutterbar according to claim 5,
**characterized in that**
the part-elements (58, 59) of the sleeve (33) are connected to each other at one end via a joint (41) and at the other end via a closure (42).

7. Cutterbar according to at least one of the previous claims,
**characterized in that**
the first integrated axial fixing (16) comprises a pin (60) which penetrates at least partially the sleeve (33) and at least partially the rasp bar (21).

8. Cutterbar according to at least one of the previous claims,
**characterized in that**
the second integrated axial fixing (17) is formed from a circumferential annular groove (39) arranged on the sleeve (33) and a locating bar (40) arranged on the bearing housing (38), wherein the locating bar (40) of the bearing housing (38) engages in the circumferential annular groove (39) of the sleeve (33).

9. Cutterbar according to at least one of the previous claims,
**characterized in that**
the bearing housing (38) comprises a bearing seat (43) and a retainer (44), wherein the bearing seat (43) and the retainer (44) are connected to each other.

10. Cutterbar according to claim 9,
**characterized in that**
the bearing seat (43) has spring-loaded holding elements (45) and the mounting or control star (19, 23) has corresponding openings (46) into which the spring-loaded holding elements (45) of the bearing seat (43) are locked.

11. Cutterbar according to claim 9 or 10,
**characterized in that**
the mounting or control star (19, 23) has chamfers (47), and the retainer (44) is inserted between the bearing seat (43) and the chamfers (47) of the mounting or control star (19, 23).

12. Cutterbar according to at least one of claims 9 to 11,
**characterized in that**
the mounting or control star (19, 23), the retainer (44) and the bearing seat (43) are connected to one another via at least one screw joint (53).

13. Cutterbar according to at least one of claims 9 to 12,
**characterized in that**
projections (40) are arranged on both sides of the retainer (44) and grooves (49) are arranged on both sides of the bearing seat (43), which together form guides (48) between the retainer (44) and the bearing seat (43).

14. Cutterbar according to at least one of the previous claims,
**characterized in that**
the sleeve (33) and/or the bearing housing (38) are designed as an injection-moulded part.

15. Cutterbar according to at least one of the previous claims,
**characterized in that**
the sleeve (33) and/or the bearing housing (38) are made of plastic.

## Revendications

1. Tablier de coupe d'une moissonneuse-batteuse (1) comprenant un rabatteur (8), le rabatteur (8) étant sensiblement constitué de plusieurs étoiles de support et de commande (19, 23) disposées à distance les unes des autres et d'au moins une barre porteuse (21), la barre porteuse (21) étant bloquée dans des moyens de palier dans la zone des étoiles de support et de commande (19, 23), chaque moyen de palier étant formé par au moins un palier (20, 26), le palier (20, 26) comprenant au moins un premier moyen de blocage axial intégré (16, 17), le premier moyen de blocage axial intégré (16) reliant la barre porteuse (21) à une douille (33) qui est disposée sur la barre porteuse (21), **caractérisé en ce qu'**un second moyen de blocage axial intégré (17) immobilise la douille (33) dans un logement de palier (38), la douille (33) étant montée à rotation dans le logement de palier (38) .

2. Tablier de coupe selon la revendication 1, **caractérisé en ce que** le premier moyen de blocage axial intégré (16) immobilise axialement la barre porteuse (21) à l'intérieur du palier (20, 26).

3. Tablier de coupe selon la revendication 1 ou 2, **caractérisé en ce que** le premier moyen de blocage axial intégré (16) est constitué d'au moins un plot (34, 35) qui est disposé dans un évidement (32) de la douille (33), l'évidement (32) de la douille (33) correspondant à la section transversale de la barre porteuse (21), et la barre porteuse (21) comportant au moins un trou (36, 37) dans lequel le plot (34, 35) pénètre.

4. Tablier de coupe selon la revendication 3, **caractérisé en ce que** le plot (34, 35) est escamotable.

5. Tablier de coupe selon au moins une des revendications précédentes, **caractérisé en ce que** la douille (33) est constituée d'au moins deux éléments partiels (58, 59) qui sont reliés entre eux de manière ouvrable et/ou séparable.

6. Tablier de coupe selon la revendication 5, **caractérisé en ce que** les éléments partiels (58, 59) de la douille (33) sont reliés entre eux, à une extrémité, par l'intermédiaire d'une articulation (41) et, à l'autre extrémité, par l'intermédiaire d'une fermeture (42).

7. Tablier de coupe selon au moins une des revendications précédentes, **caractérisé en ce que** le premier moyen de blocage axial intégré (16) comprend une broche (60) qui traverse au moins en partie la douille (33) et au moins en partie la barre porteuse (21) .

8. Tablier de coupe selon au moins une des revendications précédentes, **caractérisé en ce que** le second moyen de blocage axial intégré (17) est formé d'une gorge annulaire périphérique (39), disposée sur la douille (33), et d'une barrette de blocage (40) disposée sur le logement de palier (38), la barrette de blocage (40) du logement de palier (38) pénétrant dans la gorge annulaire périphérique (39) de la douille (33).

9. Tablier de coupe selon au moins une des revendications précédentes, **caractérisé en ce que** le logement de palier (38) comprend une coquille de palier (43) et un étrier (44), la coquille de palier (43) et l'étrier (44) étant reliés entre eux.

10. Tablier de coupe selon la revendication 9, **caractérisé en ce que** la coquille de palier (43) comporte des éléments de maintien élastiques (45) et l'étoile de support ou de commande (19, 23) comporte des ouvertures correspondantes (46) dans lesquelles se crantent les éléments de maintien élastiques (45) de la coquille de palier (43).

11. Tablier de coupe selon la revendication 9 ou 10, **caractérisé en ce que** l'étoile de support ou de commande (19, 23) comporte des replis (47), et l'étrier (44) est inséré entre la coquille de palier (43) et les replis (47) de l'étoile de support ou de commande (19, 23).

12. Tablier de coupe selon au moins une des revendications 9 à 11, **caractérisé en ce que** l'étoile de support ou de commande (19, 23), l'étrier (44) et la coquille de palier (43) sont reliés entre eux par l'intermédiaire d'au moins un assemblage vissé (53).

13. Tablier de coupe selon au moins une des revendications 9 à 12, **caractérisé en ce que** sur l'étrier (44) sont disposées, des deux côtés, des saillies (40), et sur la coquille de palier (43) sont disposées, des deux côtés, des gorges (49), lesquelles créent ensemble des moyens de guidage (48) entre l'étrier (44) et la coquille de palier (43).

14. Tablier de coupe selon au moins une des revendications précédentes, **caractérisé en ce que** la douille (33) et/ou le logement de palier (38) sont conformés en pièces moulées par injection.

15. Tablier de coupe selon au moins une des revendications précédentes, **caractérisé en ce que** la douille (33) et/ou le logement de palier (38) sont fabriqués en matière synthétique.
